(19) **Europäisches Patentamt / European Patent Office / Office européen des brevets**

(11) **EP 2 941 811 B1**

(12) **FASCICULE DE BREVET EUROPEEN**

(45) Date de publication et mention de la délivrance du brevet:
**17.02.2021 Bulletin 2021/07**

(21) Numéro de dépôt: **13808017.1**

(22) Date de dépôt: **17.12.2013**

(51) Int Cl.:
**B60L 50/50** (2019.01)

(86) Numéro de dépôt international:
**PCT/EP2013/076975**

(87) Numéro de publication internationale:
**WO 2014/106576 (10.07.2014 Gazette 2014/28)**

(54) **SYSTEME COMPRENANT UNE BATTERIE FORMEE DE MODULES DE BATTERIE, ET PROCEDE DE CONNEXION OU DE DECONNEXION D'UN MODULE DE BATTERIE CORRESPONDANT**

SYSTEM MIT EINER BATTERIE AUS BATTERIEMODULEN UND ENTSPRECHENDES VERFAHREN ZUM AN- ODER AUSSCHALTEN EINES BATTERIEMODULS

SYSTEM COMPRISING A BATTERY FORMED FROM BATTERY MODULES, AND CORRESPONDING METHOD FOR CONNECTING OR DISCONNECTING A BATTERY MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2013 FR 1350011**

(43) Date de publication de la demande:
**11.11.2015 Bulletin 2015/46**

(73) Titulaire: **Renault S.A.S.**
**92100 Boulogne-Billancourt (FR)**

(72) Inventeurs:
• **LADHARI, Othman**
  **F-381300 Echirolles (FR)**
• **THOMAS, Rémy**
  **F-38130 Echirolles (FR)**
• **PERICHON, Pierre**
  **F-38500 Voiron (FR)**
• **BUI VAN, Anh Linh**
  **F-38250 Saint Nizier du Moucherotte (FR)**

(56) Documents cités:
**US-A1- 2002 101 217     US-A1- 2011 298 427**
**US-A1- 2011 316 489     US-B2- 8 310 204**

**Description**

L'invention concerne les systèmes munis de batteries formées par des modules de batterie disposés en série, notamment les véhicules automobiles à traction électrique ou hybride.

Ces systèmes peuvent comprendre une charge à alimenter, par exemple pour un véhicule un groupe motopropulseur électrique alimenté en électricité par une batterie. Cette batterie est généralement composée d'une pluralité de modules de batterie disposés en série, et les modules peuvent être indépendamment mis en série ou non, ce qui correspond à une activation ou à une désactivation. En d'autres termes, selon la tension que l'on souhaite fournir à la charge, on active un nombre plus ou moins élevé de modules de batterie.

Un condensateur est disposé entre la batterie et la charge de manière à lisser les courants hautes fréquences mais également les courants transitoires absorbés par un étage convertisseur qui peut être un onduleur disposé en entrée du groupe motopropulseur. Lorsque la batterie (c'est-à-dire l'ensemble des modules) est raccordée au moyen de relais au groupe motopropulseur, par exemple lors du démarrage du véhicule, de forts courants transitoires apparaissent et peuvent endommager les composants, par exemple le condensateur, les relais utilisés ou encore les interrupteurs de puissance.

En outre, une variation rapide de tension aux bornes de l'étage onduleur disposé en entrée du groupe motopropulseur peut ne pas être asservie suffisamment rapidement par l'étage onduleur, ce qui peut générer des à-coups ressentis par le conducteur du véhicule en roulage. Ces à-coups peuvent endommager les éléments mécaniques du groupe motopropulseur.

Dans des véhicules, il a été proposé de précharger le condensateur au seul démarrage du véhicule en utilisant un circuit comprenant deux contacteurs et une résistance en série avec le condensateur. Un premier contacteur permet de charger le condensateur à travers la résistance avec un courant réduit, et un deuxième contacteur permet de contourner la résistance pour un fonctionnement normal. Cette solution a pour inconvénient de nécessiter un circuit comprenant des contacteurs coûteux, encombrants, et ils présentent le risque de rester fermés s'ils sont soumis à des courants trop forts.

On pourra se référer à la demande de brevet européen EP 2 361 799 qui décrit un système pour augmenter la tension aux bornes du condensateur avant de raccorder le groupe motopropulseur, c'est-à-dire un système de pré-charge du condensateur. Ce document propose notamment d'utiliser une résistance pour former un circuit de type R-C pour charger le condensateur. Ce système a pour inconvénient de ne pas permettre d'obtenir une charge complète du condensateur, la durée de chargement ayant une durée trop longue. Ce système a également pour inconvénient de rajouter une résistance en série au système. Ce système ne peut donc qu'être utilisé au démarrage du véhicule du fait de cette résistance. Il n'est donc pas adapté à l'activation ou à la désactivation d'un module de batterie pendant le fonctionnement du véhicule.

On pourra également se référer à la demande de brevet américain US 2012/0025768 qui décrit un système de pré-charge d'un condensateur comportant une résistance de faible valeur, et un ensemble d'interrupteur pour améliorer la pré-charge du condensateur. Ce système n'est pas non plus utilisable pendant le fonctionnement du véhicule.

La demande de brevet internationale WO 2009/077668 décrit un système de pré-charge d'un condensateur dans lequel on connecte un interrupteur en série avec le condensateur, et on commande cet interrupteur avec un signal à modulation de largeur d'impulsion dont le rapport cyclique varie. Cette solution a pour inconvénient d'augmenter l'impédance de la branche comportant le condensateur.

Enfin, on pourra se référer à la demande de brevet français FR 2 923 962 qui décrit un autre système de pré-charge d'un condensateur utilisant un convertisseur de puissance de type « boost », mais qui a également pour inconvénient d'augmenter l'impédance de la branche comportant le condensateur. Il est dès lors impossible d'utiliser ce système pendant le fonctionnement du véhicule à cause des pertes trop importantes dues à l'augmentation de l'impédance.

La présente invention a pour but de permettre l'activation ou la désactivation d'un module de batterie à tout moment, par exemple pour un véhicule automobile au démarrage et pendant le fonctionnement d'un véhicule.

La présente invention a également pour but d'améliorer la pré-charge d'un condensateur en réduisant la génération de courants susceptibles d'endommager les composants.

Selon un aspect, il est proposé un système comprenant une batterie formée d'une pluralité de modules de batterie disposés en série, chaque module étant équipé d'un interrupteur et d'une diode disposés en série et connectés en parallèle au module, le système comprenant en outre un condensateur relié d'une part directement par une connexion électrique à un point situé entre la diode et l'interrupteur de chaque module et d'autre part directement à la borne négative de la batterie, et une charge reliée en parallèle au condensateur.

En d'autres termes, pour chaque module de batterie, un demi-pont en H est relié en parallèle au module, la branche du milieu correspondant audit point entre la diode et l'interrupteur.

Selon une caractéristique générale, le système comprend des moyens de commande de chaque interrupteur de module à partir d'un signal à modulation de largeur d'impulsion ayant un rapport cyclique variant entre 0% et 100%.

De préférence, le système comprend des moyens de commande de chaque interrupteur de module à partir d'un signal à modulation de largeur d'impulsion ayant un rapport cyclique variant entre 0% et 100%, 0% et 100% étant exclus ou entre 5% et 95%. On obtient ainsi une meilleure commande des interrupteurs, les impulsions trop courtes pouvant ne pas permettre de bien commander les interrupteurs.

On peut ainsi utiliser des interrupteurs capables de commuter plus ou moins rapidement. Néanmoins, il convient de noter qu'il est possible d'utiliser des interrupteurs capables de commuter rapidement pour étendre l'intervalle dans lequel varie le rapport cyclique, par exemple des interrupteurs utilisant du Nitrure de Gallium (GaN).

L'ensemble formé par l'interrupteur, la diode, la connexion électrique ayant une inductance intrinsèque dite de câblage et la charge forme un circuit bien connu de l'homme du métier sous le nom de « buck ». Ici, le condensateur est seul dans sa branche sur laquelle vient se raccorder la charge, il n'y a donc pas de pertes à cause d'une augmentation d'impédance. On peut donc connecter ou déconnecter un module de batterie à tout moment.

En outre, le système permet de charger plus rapidement le condensateur et de contrôler la durée de la charge afin d'éviter les forts courants transitoires.

On peut noter que l'on passe d'un rapport cyclique de 0% (interrupteur ouvert) à un rapport cyclique de 100% (interrupteur fermé) par exemple lors d'une connexion d'un module supplémentaire : la tension du module à connecter s'additionnera à la tension des modules déjà connectés une fois que le rapport cyclique aura varié jusque 100%.

On passe d'un rapport cyclique de 100% à un rapport cyclique de 0% lors d'une déconnexion d'un module : la tension du module à déconnecter sera soustraite alors que le rapport cyclique varie jusque 0%. Bien entendu, des moyens peuvent être prévus pour assurer une déconnexion d'un module dans un ensemble de modules en série sans empêcher le fonctionnement de l'ensemble, par exemple des diodes en parallèle des interrupteurs ou encore des diodes intrinsèques d'interrupteurs.

Les moyens de commande de chaque interrupteur de module peuvent faire varier le rapport cyclique du signal à modulation de largeur d'impulsion d'un même pourcentage à chaque impulsion, par exemple 1% à chaque impulsion.

En outre, les moyens de commande peuvent faire varier la fréquence du signal à modulation de largeur d'impulsion, par exemple en fonction du rapport cyclique.

Il peut être particulièrement avantageux de faire varier cette fréquence afin de réduire la durée des périodes correspondant à certains rapports cycliques. En particulier, les rapports cycliques voisins de 50% correspondent ici aux variations maximales de courant, et il est donc préférable de réduire leur durée, c'est-à-dire d'augmenter la fréquence de commutation.

Le système peut comprendre en outre pour chaque module un condensateur supplémentaire relié en parallèle à la diode et à l'interrupteur du module.

Chaque condensateur supplémentaire peut fournir des courants transitoires qui s'additionnent à ceux que fournit le condensateur principal relié en parallèle à la charge, ce qui réduit les pertes de puissance engendrées par la commutation des interrupteurs et qui permet également d'utiliser un condensateur ayant une plus faible valeur de capacité.

Pour chaque module, l'interrupteur peut être un transistor MOSFET et la diode est une diode intrinsèque de transistor MOSFET. En d'autres termes, deux transistors MOSFET sont disposés en série et le condensateur est raccordé entre ces deux MOSFET. La diode est quant à elle obtenue en bloquant l'un des deux transistors MOSFET, par exemple celui relié à la borne négative du module de batterie.

Le système peut comprendre des moyens de commande additionnels du transistor MOSFET correspondant à la diode de chaque module à partir du signal inverse de celui commandant chaque interrupteur. Bien entendu, on peut prendre en considération un temps de décalage, par exemple un temps-mort, pour éviter les courts-circuits de la batterie pendant la commutation.

On peut ainsi faire circuler un courant à travers le transistor correspondant à ladite diode lorsque l'interrupteur est ouvert, et permettre la circulation d'un courant de signe négatif (la diode empêchant normalement ce sens de circulation). On empêche donc l'apparition de discontinuités dans la circulation du courant.

Le système peut comporter des moyens d'ajustement de l'inductance de chaque connexion électrique, par exemple une portion supplémentaire de connexion électrique ou des éléments en ferrite pour ajuster cette inductance.

Selon un autre aspect, il est proposé un véhicule automobile à traction électrique ou hybride comprenant ledit système, ladite charge étant le groupe motopropulseur du véhicule.

L'invention permet d'obtenir une réduction des à-coups ressentis par le conducteur pendant le roulage.

Selon un autre aspect, il est proposé un procédé d'adaptation de la tension aux bornes d'un condensateur d'entrée d'une charge d'un système équipé d'une batterie formée d'une pluralité de modules de batterie munis chacun d'un interrupteur, ledit procédé comprenant une connexion et/ou une déconnexion au condensateur d'un module de batterie.

Selon une caractéristique générale, le procédé comprend une élaboration d'un signal à modulation de largeur d'impulsion ayant un rapport cyclique variant entre 0% et 100% pour commander l'interrupteur dudit module de batterie.

On peut faire varier le rapport cyclique du signal à modulation de largeur d'impulsion d'un même pourcentage à chaque impulsion.

On fait varier la fréquence du signal à modulation de largeur d'impulsion.

Le procédé peut comprendre un ajustement de l'inductance de la connexion électrique reliant le condensateur et le module de batterie.

On peut faire varier le rapport cyclique entre 0% et 100%, 0% et 100% étant exclus ou entre 5% et 95%.

D'autres buts, caractéristiques et avantages apparaîtront à la lecture de la description suivante donnée uniquement en tant qu'exemple non limitatif et faite en référence aux dessins annexés sur lesquels :

- la figure 1 illustre schématiquement une batterie raccordée à un groupe motopropulseur,
- les figures 2 à 4 illustrent schématiquement des circuits électriques de modes de réalisation et de mise en œuvre selon l'invention, et
- la figure 5 illustre l'évolution de la tension aux bornes du condensateur et l'évolution du courant à travers l'inductance reliant la batterie au condensateur lors de la connexion d'un module de batterie.

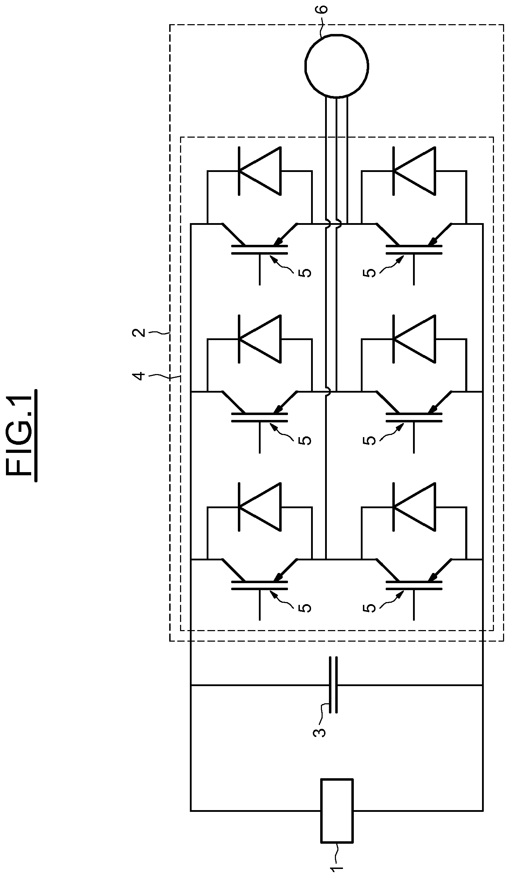

Sur la figure 1 on a représenté une batterie 1, par exemple une batterie de véhicule automobile à traction électrique ou hybride formée par une pluralité de modules de batterie en série. La batterie 1 est reliée à un groupe motopropulseur 2 par l'intermédiaire d'un condensateur 3. C'est le condensateur 3 qu'il convient de pré-charger pour le protéger ainsi que les autres composants par exemple lors du démarrage du véhicule (raccordement de la batterie 1) ou lors de la connexion d'un module de batterie.

Le groupe motopropulseur 2 comprend de manière classique un étage onduleur 4 comprenant une pluralité d'interrupteurs 5 destinés à commander une machine électrique 6, qui comporte des pièces mécaniques qui peuvent être endommagées lors de l'apparition de courants trop élevés lors du raccordement de la batterie ou d'un module de batterie.

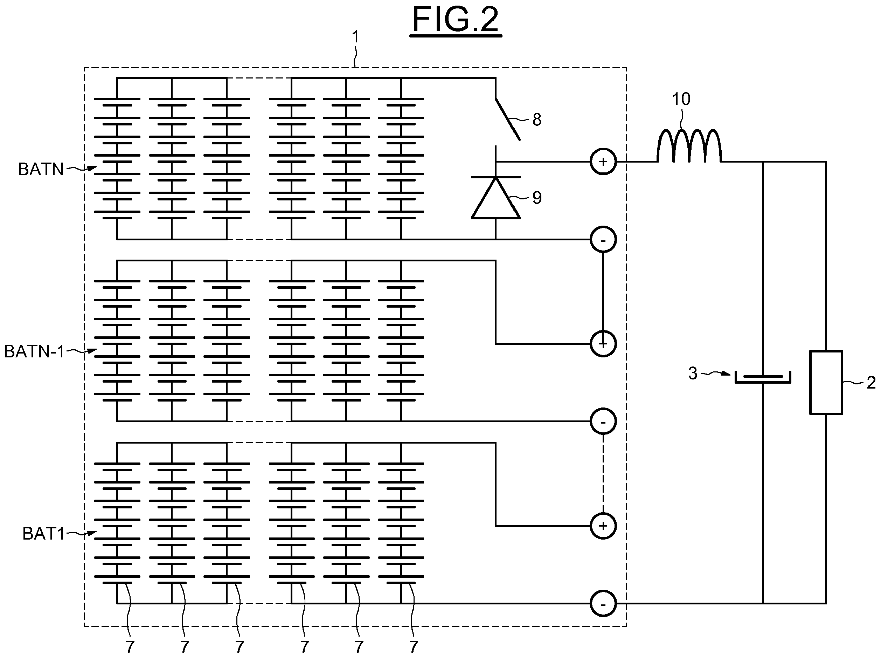

Sur la figure 2, on a représenté de manière plus détaillée la batterie 1 qui comporte une pluralité de modules de batterie référencés BAT1 à BATN. Trois modules de batterie sont représentés ici, BAT1, BATN-1 et BATN. Chaque module comporte une pluralité de cellules 7 de batteries disposées à la fois en série et en parallèle. Pour des raisons de simplicité, toutes les cellules 7 n'ont pas été référencées sur la figure 2.

Le module de cellule BATN a été représenté avec un interrupteur 8 et une diode 9 disposés en série entre les bornes + et - du module de batterie BATN. Une connexion électrique, représentée par son inductance intrinsèque 10 est connectée d'une part à un point situé entre l'interrupteur 8 et la diode 9, et d'autre part au condensateur 3, sur lequel le groupe motopropulseur 2 est raccordé, représenté ici par une charge.

On remarque que la branche comportant le condensateur 3 ne comporte pas d'interrupteur alors que tel est le cas dans certaines solutions connues de l'art antérieur. Il n'y a donc pas d'augmentation d'impédance d'un circuit de puissance pouvant engendrer des pertes.

Bien entendu, les autres modules de batterie BAT1 à BATN-1 peuvent également comprendre des interrupteurs 8 et des diodes 9, ainsi qu'une connexion au condensateur qui peut être laissée ouverte par exemple une fois que la connexion du module est complète. On peut également noter que l'interrupteur 8 de chaque module déjà connecté est en position fermée : le rapport cyclique de la commande est de 100% pour ces interrupteurs.

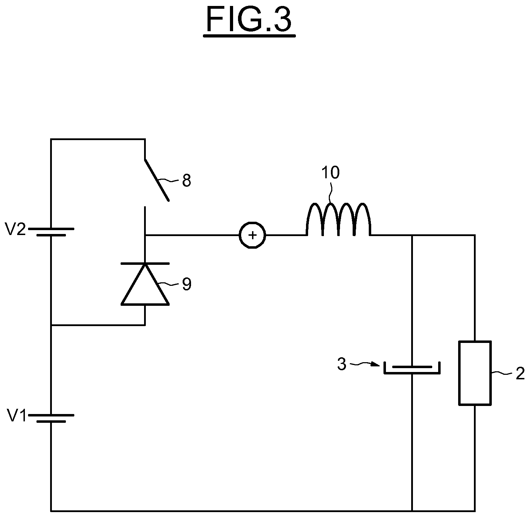

Le circuit de la figure 2 peut être représenté se manière simplifiée, comme illustré sur la figure 3. On reconnait un circuit de type convertisseur « Buck » bien connu de l'homme du métier.

La tension aux bornes du module BATN est représentée par une source de tension référencée V2, et la tension aux bornes de l'ensemble des modules BAT1 à BATN-1 est représentée par une source de tension référencée V1.

Lors de la connexion du module BATN, on souhaite obtenir une tension aux bornes du condensateur et donc du groupe motopropulseur 2 égale à la somme des tensions V1 et V2.

On peut calculer la variation de la valeur du courant traversant l'inductance 10 lorsque l'interrupteur 8 est fermé et lorsqu'il est ouvert. Ces deux valeurs de variation de la valeur du courant sont égales, et en notant $\delta$ le rapport cyclique du signal à modulation de largeur d'impulsion appliqué par des moyens de commande (non représentés) sur l'interrupteur 8, on peut en déduire que la tension Vs est liée à chaque instant aux tensions V1 et V2 par la relation suivante :

$$Vs = V1 + \delta \times V2$$

Les moyens de commande peuvent être compris dans une unité de commande électronique du véhicule (UCE) ou dans tout autre dispositif apte à produire des signaux à modulation de largeur d'impulsion.

Par ailleurs, en notant L la valeur de l'inductance 10 et T la période du signal à modulation de largeur d'impulsion, on obtient une expression de la variation du courant notée $\Delta I$ :

$$\Delta I = \frac{V2 \times T}{L}(1-\delta)\delta$$

La valeur maximale de la variation du courant ($\Delta I_{max}$) est donc obtenue pour un rapport cyclique de 50% :

$$\Delta I_{max} = \frac{V2 \times T}{4L}$$

Les paramètres du circuit qui peuvent être modifiées comprennent la fréquence ou la période du signal à modulation de largeur d'impulsion appliqué à l'interrupteur 8, la variation du rapport cyclique, et les éléments parasites (l'inductance 10).

Afin de protéger les composants, il est préférable de diminuer la valeur de $\Delta I_{max}$. On peut donc par exemple augmenter la valeur L de l'inductance 10 en rallongeant la connexion électrique ou en utilisant de la ferrite.

On peut également augmenter la fréquence du signal à modulation de largeur d'impulsion. Cela étant, les pertes dans l'interrupteur (pouvant être un transistor MOSFET) limitent cette augmentation de fréquence. Ces pertes peuvent être dues à la conduction à travers l'interrupteur qui dépend de sa résistance interne ou aux pertes par commutation de cet interrupteur.

De manière classique, on peut calculer les pertes lors de la conduction, lors de la fermeture et lors de l'ouverture de l'interrupteur. En prenant en considération la température maximale de l'interrupteur (ou de la jonction dans le cas d'un transistor MOSFET), on peut obtenir la fréquence maximale de commutation $f_{max}$ :

$$f_{max} = \frac{E_{commutation\,max}}{(E_{ON} + E_{OFF}) \times T_{ch\,arg\,e}}$$

Avec :

$E_{commutation\,max}$ l'énergie de commutation maximale,
$E_{ON}$ l'énergie à l'ouverture de l'interrupteur,
$E_{OFF}$ l'énergie à la fermeture de l'interrupteur, et
$T_{charge}$ la durée totale de la charge qui dépend de la variation du rapport cyclique.

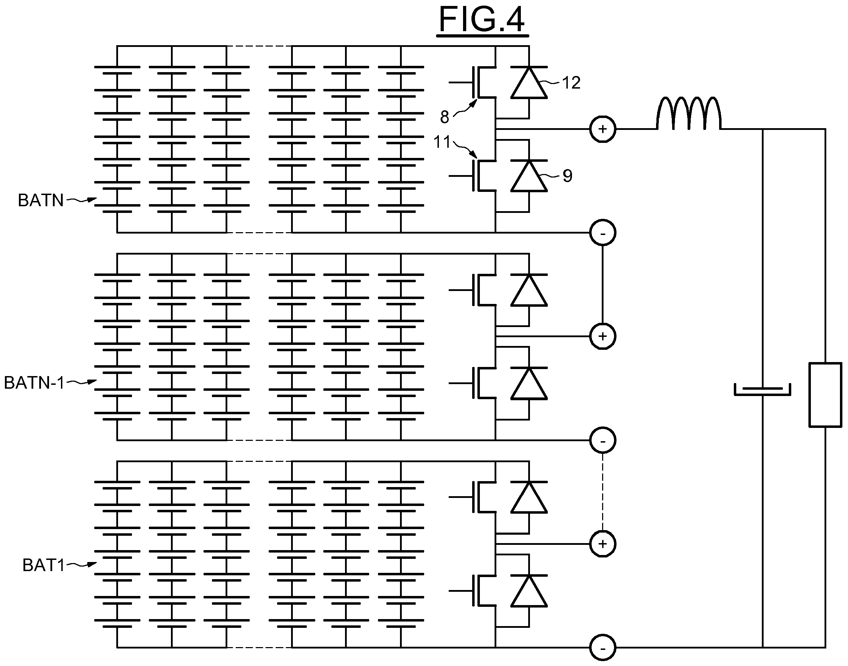

Sur la figure 4, on a représenté une variante de l'invention dans laquelle l'interrupteur 8 est un transistor MOSFET et la diode 9 est une diode intrinsèque d'un transistor MOSFET 11. Le transistor 8 est également muni d'une diode intrinsèque 12.

Tous les modules de batterie BAT 1 à BATN peuvent être équipé de deux transistors MOSFET.

On peut noter qu'en appliquant des signaux de commande complémentaires sur les transistors 8 et 11, on autorise la circulation d'un courant de sens négatif, normalement bloqué par la diode 9. Aucune discontinuité du courant ne peut donc apparaitre.

Dans une autre variante non représentée, on peut raccorder un condensateur supplémentaire en parallèle sur la branche supportant les deux transistors MOSFET.

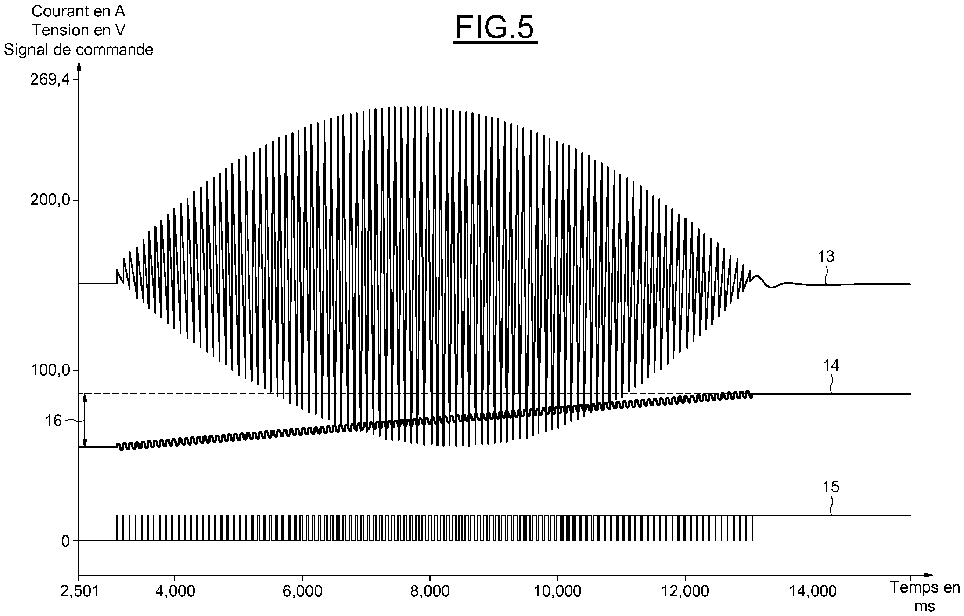

Sur la figure 5, on a représenté sur la courbe 13 l'évolution du courant traversant l'inductance 10 en fonction du temps, sur la courbe 14 l'évolution de la tension aux bornes du condensateur 3 en fonction du temps, et sur la courbe 15 l'évolution du signal de commande appliqué à l'interrupteur 15 en fonction du temps, par exemple lors du raccordement d'un module de batterie supplémentaire.

On peut noter que l'augmentation de tension correspondant à la connexion d'un module supplémentaire (flèche 16) est de l'ordre de 30 volts. En outre, comme illustré par les courbes 13, 14 et 15, lorsque le rapport cyclique augmente, on a une augmentation presque linéaire de la tension aux bornes du condensateur, et une oscillation du courant. La variation maximale du courant est obtenue pour un rapport cyclique voisin de 50%, comme indiqué ci-avant. Par ailleurs, le courant circulant à travers l'inductance 10 ne s'annule pas ici, on est donc dans un mode de conduction continu.

Grâce à l'invention, on obtient un pré-chargement d'un condensateur avec des pertes réduites, et dont on peut contrôler la durée en changeant par exemple la fréquence ou le rapport cyclique du signal à modulation de largeur d'impulsion.

En passant d'un rapport cyclique ayant une valeur de 0% à une valeur de 100% suffisamment lentement (ou inversement) par rapport au temps de réponse du groupe motopropulseur, on peut laisser le groupe motopropulseur asservir le moteur sans risquer de dégradations.

L'invention est également compatible avec tout type d'interrupteur et de diodes, par exemple des composants de type IGBT bien connus de l'homme du métier, ou également des composants sur un substrat de nitrure de gallium (GaN).

En outre, l'invention peut être utilisée pour tout type de batterie.

## Revendications

1. Système comprenant une batterie formée d'une pluralité de modules de batterie (BATI, BATN-1, BATN) disposés en série, chaque module étant équipé d'un interrupteur (8) et d'une diode disposés en série et connectés en parallèle au module, le système comprenant en outre un condensateur configuré pour être relié d'une part directement par une connexion électrique à un point situé entre la diode et l'interrupteur de chaque module et d' autre part directement à la borne négative de la batterie, et une charge reliée en parallèle au condensateur, **caractérisé en ce qu'**il comprend des moyens de commande de l'interrupteur (8) de module (BATN) à partir de la variation de la fréquence d'un signal à modulation de largeur d'impulsion ayant un rapport cyclique ($\delta$) variant entre 0% et 100%.

2. Système selon la revendication 1, dans lequel les moyens de commande de chaque interrupteur de module font varier le rapport cyclique ($\delta$) du signal à modulation de largeur d'impulsion d'un même pourcentage à chaque impulsion.

3. Système selon l'une quelconque des revendications précédentes, comprenant en outre pour chaque module un condensateur supplémentaire relié en parallèle à la diode (9) et à l'interrupteur (8) du module.

4. Système selon l'une quelconque des revendications précédentes, dans lequel pour chaque module, l'interrupteur est un transistor MOSFET (8) et la diode (9) est une diode intrinsèque de transistor MOSFET (11).

5. Système selon la revendication 4, comprenant en outre des moyens de commande additionnels du transistor MOSFET correspondant à la diode de chaque module à partir du signal inverse de celui commandant chaque interrupteur.

6. Système selon l'une quelconque des revendications précédentes, comportant des moyens d'ajustement de l'inductance (L) de chaque connexion électrique.

7. Système selon l'une quelconque des revendications précédentes, comprenant des moyens de commande de chaque interrupteur de module à partir d'un signal à modulation de largeur d'impulsion ayant un rapport cyclique ($\delta$) variant entre 0% et 100%, 0% et 100% étant exclus ou entre 5% et 95%.

8. Véhicule automobile à traction électrique ou hybride comprenant un système selon l'une quelconque des revendications précédentes, ladite charge étant le groupe motopropulseur du véhicule.

9. Procédé d'adaptation de la tension aux bornes d'un condensateur (3) d'entrée d'une charge (2) d'un système, le système comprenant une batterie formée d'une pluralité de modules de batterie munis chacun d'un interrupteur et d'une diode disposés en série et connectés en parallèle au module, ledit procédé comprenant une connexion et/ou une déconnexion au condensateur d'un point situé entre la diode et l'interrupteur du de batterie (BATN), **caractérisé en ce qu'**il comprend une élaboration d'un signal à modulation de largeur d'impulsion dont on fait varier la fréquence pour commander l'interrupteur dudit module de batterie.

10. Procédé selon la revendication 9, dans lequel on fait varier le rapport cyclique ($\delta$) du signal à modulation de largeur d'impulsion d'un même pourcentage à chaque impulsion.

11. Procédé selon l'une quelconque des revendications 9 à 11, comprenant un ajustement de l'inductance (L) de la connexion électrique reliant le condensateur et le module de batterie.

12. Procédé selon l'une quelconque des revendications 9 à 12, dans lequel on fait varier le rapport cyclique ($\delta$) entre 0% et 100%, 0% et 100% étant exclus ou entre 5% et 95%.

**Patentansprüche**

1. System, das eine Batterie enthält, die von einer Vielzahl von in Reihe geschalteten Batteriemodulen (BATI, BATN-1, BATN) gebildet wird, wobei jedes Modul mit einem Schalter (8) und mit einer Diode ausgestattet ist, die in Reihe angeordnet und parallel mit dem Modul verbunden sind, wobei das System außerdem einen Kondensator, der konfiguriert ist, einerseits direkt durch eine elektrische Verbindung mit einem Punkt, der sich zwischen der Diode und dem Schalter jedes Moduls befindet, und andererseits direkt mit der negativen Klemme der Batterie verbunden zu werden, und eine Last enthält, die parallel mit dem Kondensator verbunden ist, **dadurch gekennzeichnet, dass** es Steuereinrichtungen des Schalters (8) des Moduls (BATN) ausgehend von der Veränderung der Frequenz eines Impulsbreitenmodulationssignals enthält, das ein zwischen 0% und 100% variierendes Taktverhältnis ($\delta$) hat.

2. System nach Anspruch 1, wobei die Steuereinrichtungen jedes Modulschalters das Taktverhältnis ($\delta$) des Impulsbreitenmodulationssignals um den gleichen Prozentsatz bei jedem Impuls variieren.

3. System nach einem der vorhergehenden Ansprüche, das außerdem für jedes Modul einen zusätzlichen Kondensator enthält, der mit der Diode (9) und dem Schalter (8) des Moduls parallel verbunden ist.

4. System nach einem der vorhergehenden Ansprüche, wobei für jedes Modul der Schalter ein MOSFET-Transistor (8) und die Diode (9) eine eigene Diode eines MOSFET-Transistors (11) ist.

5. System nach Anspruch 4, das außerdem zusätzliche Steuereinrichtungen des der Diode jedes Moduls entsprechenden MOSFET-Transistors ausgehend vom Signal invers zu demjenigen, das jeden Schalter steuert, enthält.

6. System nach einem der vorhergehenden Ansprüche, das Anpassungseinrichtungen der Induktivität (L) jeder elektrischen Verbindung aufweist.

7. System nach einem der vorhergehenden Ansprüche, das Steuereinrichtungen jedes Modulschalters ausgehend von einem Impulsbreitenmodulationssignal enthält, das ein Taktverhältnis ($\delta$) hat, das zwischen 0% und 100%, wobei 0% und 100% ausgeschlossen sind, oder zwischen 5% und 95% variiert.

8. Kraftfahrzeug mit elektrischem oder hybridem Antrieb, das ein System nach einem der vorhergehenden Ansprüche enthält, wobei die Last die Antriebseinheit des Fahrzeugs ist.

9. Verfahren zur Einstellung der Spannung an den Klemmen eines Eingangskondensators (3) einer Last (2) eines Systems, wobei das System eine von einer Vielzahl von Batteriemodulen gebildete Batterie enthält, die je mit einem Schalter und einer Diode versehen sind, die in Reihe angeordnet und parallel mit dem Modul verbunden sind, wobei das Verfahren eine Verbindung mit und/oder eine Trennung vom Kondensator eines Punkts, der sich zwischen der Diode und dem Schalter der Batterie (BATN) befindet, enthält, **dadurch gekennzeichnet, dass** es eine Erarbeitung eines Impulsbreitenmodulationssignals enthält, dessen Frequenz variiert wird, um den Schalter des Batteriemoduls zu steuern.

10. Verfahren nach Anspruch 9, wobei das Taktverhältnis (δ) des Impulsbreitenmodulationssignals bei jedem Impuls um den gleichen Prozentsatz variiert wird.

11. Verfahren nach einem der Ansprüche 9 bis 11, das eine Anpassung der Induktivität (L) der elektrischen Verbindung enthält, die den Kondensator und das Batteriemodul verbindet.

12. Verfahren nach einem der Ansprüche 9 bis 12, wobei das Taktverhältnis (δ) zwischen 0% und 100%, wobei 0% und 100% ausgeschlossen sind, oder zwischen 5% und 95% variiert wird.


**Claims**

1. System comprising a battery formed of a plurality of battery modules (BATI, BATN-1, BATN) arranged in series, each module being provided with a switch (8) and a diode that are arranged in series and connected in parallel with the module, the system further comprising a capacitor configured to be connected both directly, by an electrical connection, to a point located between the diode and the switch of each module and directly to the negative terminal of the battery, and a load connected in parallel with the capacitor, **characterized in that** it comprises means for controlling the switch (8) of a module (BATN) on the basis of the variation of the frequency of a pulse-width modulation signal that has a duty cycle (δ) which varies between 0% and 100%.

2. System according to Claim 1, wherein the means for controlling each module switch cause the duty cycle (δ) of the pulse-width modulation signal to vary by the same percentage on each pulse.

3. System according to either one of the preceding claims, further comprising, for each module, an additional capacitor connected in parallel with the diode (9) and with the switch (8) of the module.

4. System according to any one of the preceding claims, wherein, for each module, the switch is a MOSFET transistor (8) and the diode (9) is an intrinsic diode of a MOSFET transistor (11).

5. System according to Claim 4, further comprising additional means for controlling the MOSFET transistor corresponding to the diode of each module on the basis of the inverse signal of the signal that controls each switch.

6. System according to any one of the preceding claims, including means for adjusting the inductance (L) of each electrical connection.

7. System according to any one of the preceding claims, comprising means for controlling each module switch on the basis of a pulse-width modulation signal that has a duty cycle (δ) which varies between 0% and 100%, 0% and 100% being excluded, or between 5% and 95%.

8. Motor vehicle with electric or hybrid drive comprising a system according to any one of the preceding claims, said load being the powertrain of the vehicle.

9. Method for adjusting the voltage across the terminals of an input capacitor (3) of a load (2) of a system, the system comprising a battery formed of a plurality of battery modules, each provided with a switch and a diode that are arranged in series and connected in parallel with the module, said method comprising connecting a point located between the diode and the switch of the battery (BATN) to the capacitor and/or disconnecting said point from the capacitor, **characterized in that** it comprises producing a pulse-width modulation signal, the frequency of which is varied in order to control the switch of said battery module.

10. Method according to Claim 9, wherein the duty cycle (δ) of the pulse-width modulation signal is varied by the same percentage on each pulse.

11. Method according to any one of Claims 9 to 11, comprising adjusting the inductance (L) of the electrical connection that connects the capacitor and the battery module.

12. Method according to any one of Claims 9 to 12, wherein the duty cycle (δ) is varied between 0% and 100%, 0% and 100% being excluded, or between 5% and 95%.

# FIG.1

EP 2 941 811 B1

## FIG.2

EP 2 941 811 B1

# FIG.3

FIG.4

FIG.5

Courant en A
Tension en V
Signal de commande

269,4

200,0

100,0

16

0

2,501    4,000    6,000    8,000    10,000    12,000    14,000    Temps en ms

13

14

15

EP 2 941 811 B1

13

## RÉFÉRENCES CITÉES DANS LA DESCRIPTION

**Documents brevets cités dans la description**

- EP 2361799 A
- US 20120025768 A
- WO 2009077668 A
- FR 2923962